# EUROPEAN PATENT SPECIFICATION

(11) **EP 4 580 847 B1**
(45) Date of publication and mention of the grant of the patent: **19.11.2025**
(21) Application number: 24801835.0
(22) Date of filing: 25.10.2024
(51) Int. Cl.: B28B 1/00, B28B 13/02, B29C 67/24

(54) **METHOD AND PRODUCTION SYSTEM FOR MANUFACTURING AN ARTIFICIAL AGGLOMERATE MATERIAL SLAB**
VERFAHREN UND PRODUKTIONSSYSTEM ZUR HERSTELLUNG EINER PLATTE AUS KÜNSTLICHEM AGGLOMERATMATERIAL
PROCÉDÉ ET SYSTÈME DE PRODUCTION POUR LA FABRICATION D'UNE DALLE DE MATÉRIAU AGGLOMÉRÉ ARTIFICIEL

(30) Priority: 25.10.2023 EP 23383092
(43) Date of publication of application: 09.07.2025
(73) Proprietor: Cosentino Research & Development, S.L., 04850 Cantoria, Almería (ES)
(72) Inventor: PÉREZ MENA, Diego, 04850 Cantoria, Almería (ES); LINARES MENCHÓN, Francisco Jesús, 04850 Cantoria, Almería (ES); GRIMALT RIBES, Jaume, 04850 Cantoria, Almería (ES); AYUSO SÁNCHEZ, María Jesús, 04850 Cantoria, Almería (ES)
(74) Representative: ABG Intellectual Property Law, S.L.
(86) International application number: PCT/EP2024/080185
(87) International publication number: WO 2025/088094

(56) References cited:
- EP-A1- 4 194 167
- IT-A1- 202100 020 675
- US-A1- 2017 355 101
- US-A1- 2019 105 800
- US-A1- 2021 268 686
- US-A1- 2022 097 258

## Description

### FIELD OF THE DISCLOSURE

The present disclosure falls in the field of materials for construction, decoration, and architecture, made of artificial stone, and relates to artificial agglomerate materials or stones having chromatic effects and/or decorations, used as surfaces for counters, kitchen tops, sinks, shower trays, wall cladding, flooring, or the like. Particularly, the present disclosure relates to a method for manufacturing an artificial agglomerate material slab and a production system for manufacturing such artificial agglomerate material slab.

### BACKGROUND OF THE DISCLOSURE

Artificial agglomerate stone slabs, tiles or sheets frequently simulate natural stones and are used in the construction, decoration, architecture, and design sectors. The habitual processes for manufacturing theses slabs, tiles or sheets at industrial scale are well established nowadays.

One of the most popular artificial stone materials and highly appreciated for their aesthetic, hardness and resistance to staining and wear, are the so-called quartz agglomerate surfaces, mineral agglomerate surfaces, or engineered stone surfaces. These artificial stone materials are extensively used for countertops, claddings, floorings, sinks and shower trays, among others. Also, these artificial stone materials can be more generally called artificial agglomerate stones. Offering superior performance, these materials offer an improved alternative to natural stones such as marble or granite in their traditional applications.

Artificial agglomerate stones can be made simulating colors and patterns in natural stone or they might also have a totally artificial appearance, e.g., with plain bright red or fuchsia colors. The basis of their composition and the technology currently implemented for manufacturing the artificial agglomerate stones dates back from the late 1970s, as developed by the company Breton SpA which is nowadays commercially known in the sector under the name Bretonstone^{®}.

General concepts of the manufacturing of artificial agglomerate stones are disclosed, for example, in the patent document US4204820A. In the production process derived from the general disclosure in US4204820A, inorganic (stone, mineral or synthetic) granulates and powders - commonly quartz, synthetic cristobalite and/or other mineral granulates - having varied particle sizes, are firstly mixed with a hardenable binder, frequently a liquid organic resin. The resulting mixture is homogenized and distributed into a temporary mold or alternatively onto a sheet of paper, where it is then compacted by vibrocompaction under vacuum and subsequently hardened.

Recently, there has been an increasing demand for this type of products, in particular the materials which are imitations of natural marble slabs. Some of those marble slabs are often characterized by having relatively wider veins of a material of different color than the background material, showing veins which extend through different distances in the length and/or the width of the slab, and which are visible partially or fully through the thickness of the slab.

In order to simulate the appearance of these natural stones in artificial agglomerate materials, a frequent approach has been to use combinations of different types of pigmented (unhardened) mixtures, which are separately distributed on a surface before compaction and hardening steps.

Different strategies have been described for the distribution of the different pigmented mixtures. In some cases, as described in WO 2019101823 A1, a template might be used to create cavities in a layer of a first mixture, and then filling the cavities with a second mixture different from the first mixture. Alternatively, as described e.g. in EP 3486052 A1, a tool can be used to mechanize a layer of first mixture to create a furrow or a cavity. Often, a second mixture is subsequently filled in.

Consumers have different preferences regarding the final appearance of artificial agglomerate material slabs. While some of them would appreciate artificial agglomerate materials resulting from the application of the strategies mentioned above for creating veined effect in these materials, others would prefer other chromatic combinations or effects.

In the light of the known prior art, there is a need to provide an improved method to produce artificial agglomerate material slabs, in an industrial efficient and highly reproducible way, resulting in new types of chromatic or aesthetic effects that maintain some resemblance to, and therefore also the appeal of, the patterns found in some natural marble and other veined natural stone materials.

Document EP4194167A1 describes a method and a production system for manufacturing a slab of artificial agglomerated stone, according to the preambles of claims 1 and 7 respectively.

Document US2019/105800A1 describes a method and apparatus for forming marbleized engineered stone.

### DESCRIPTION OF THE DISCLOSURE

The present disclosure provides a solution for the above-mentioned issues by a method for manufacturing an artificial agglomerate material slab according to claim 1 and a production system according to claim 7. In dependent claims, embodiments of the different aspects of the disclosure are defined.

In a first aspect, the disclosure provides a method for manufacturing an artificial agglomerate material slab, the method comprising the following steps:
a) dispensing a first layer of a first mixture onto a first surface, the first layer having a first thickness;
b) creating at least one groove in the first layer by a first tool, the at least one groove extending at least partially through the first thickness of the first layer;
c) dispensing a second mixture into the at least one groove of the first layer; and
d) compacting and hardening the combination of the first and second mixtures;
wherein:
- the first tool is mounted on a first robotic device;
- the first tool comprises a first conical element;
- the first conical element has a first end, a second end, an axis and a height, the first end being narrower than the second end; and
- the at least one groove is created in the first layer by inserting the first conical element, with the first end first, into the first thickness of the first layer, and by rotating the first conical element around a first axis that is substantially parallel to the axis or the height of the first conical element, as the first conical element is translated by the first robotic device following at least one predetermined path through the first layer.

Advantageously, the method of this aspect of the disclosure allows manufacturing slabs of artificial agglomerate material, such as artificial agglomerate stone, having novel veined aesthetic effects. Specifically, these novel veined aesthetic effects are provided in the top and/or lower major surface of the slab as well as in its thickness. The veined aesthetic effects in the thickness of the slab are visible at the edges of the slab, e.g. when the slab is cut-to-size and installed for the intended application.

The first tool is mounted on a first robotic device. The first tool comprises a first conical element that shall be understood as an element substantially shaped as a cone or as the frustum of a cone. The first conical element comprises a first end and a second end, wherein the first end is narrower than the second end. The first end can be rounded or blunt in order to avoid damaging the first surface in case the first end contacts it when creating the at least one groove. In other words, the first conical element has a narrow end and a wide end wherein the narrow end corresponds to the first end and the wide end corresponds to the second end. In addition, the first conical element has a height which is the dimension of the first conical element from the first end to the second end in the direction perpendicular to the plane of the second end. The height of the first conical element defines a height direction that is perpendicular to the plane defined by the second (i.e. wide) end. The first conical element also has an axis. For a first conical element shaped as a cone the axis is the direction of the line segment from the vertex to the center of the second end of the first conical element. For a first conical element shaped as a frustum of a cone, the axis is the direction of the line segment from the center of the first end to the center of the second end of the first conical element.

The first conical element is arranged to be inserted into the first layer with the first end first. That is, when the first conical element is approached to the first layer in order to be inserted, the first end of the first conical element is more proximal to the first layer than the second end, so that the first end is inserted before the rest of the first conical element and before the second end. Therefore, in order to create the at least one groove in the first layer of the first mixture, the first conical element is inserted with its first end first, at least partially into the thickness of first layer. The first conical element is spun (i.e. rotated) about a first axis substantially parallel to the axis or the height direction of the first conical element, before, simultaneously or after the first conical element is inserted into the first layer.

In an embodiment, the first conical element is arranged with the axis or the height direction of the first conical element parallel or essentially parallel to the thickness direction of the first layer.

In an embodiment, the first layer is dispensed by a first dispenser in a substantially horizontal position, with the thickness direction of the first layer essentially coinciding with the vertical direction, and the first conical element is arranged with its axis or height direction essentially also in the vertical direction. The first axis already mentioned above may be also arranged essentially in the vertical direction. In another embodiment, the first conical element is arranged with its axis or height direction tilted relative to the thickness direction of the first layer, such as with a tilt angle of 0-15°, or 0-5°.

The first conical element inserted into the first layer is also translated by the first robotic device following at least one predetermined path through at least portions of the length and/or width of the first layer, while the first conical element is spun at least during a portion of said one path. The at least one path may comprise several paths. The combination of rotation and translation of the first conical element of the first tool gives rise to the at least one groove.

By rotating the first conical element as it is translated inserted into the first layer, together with the particular shape of the first conical element, grooves are produced with a particular cross-section. The first mixture is partially pressed by the rotating first conical element to form compacted groove walls as the first conical element translates and rotates, while the slanted side surface and the rotation also smooth said walls, reducing the presence of large pores or crevices. Part of the first mixture will also be displaced outside the groove and over its sides by the effect of first conical element rotation.

Thus, grooves can be produced following predetermined paths, without the groove walls being distorted or broken, as it happens with other tools for creating the grooves that are shaped as a plow or as a roller blade. Furthermore, the combination of rotation speed and translational speed of the first conical element, as it creates the at least one groove, results in a more efficient compaction and smoothing of the walls of the groove being created.

The first layer of a first mixture may have a shape corresponding to the artificial agglomerate material slab being manufactured, normally with some excess in its dimensions to compensate for the shrinkage that may be produced during compacting and hardening. In an embodiment, the average thickness of this first layer ranges from 10 mm to 200 mm, or from 15 mm to 100 mm.

The artificial agglomerate material can be a solid agglomerate surface or stone, a mineral agglomerate surface or stone, or an engineered stone, as described herein and as such terms are generally understood in the technical field of the disclosure. For clarity purposes, but without intending to be limiting, the terms agglomerate material, agglomerate stone or artificial agglomerate material or artificial agglomerate stone, refer herein at least to all materials included in the definition of agglomerate stone contained in European standard EN 14618:2009.

The artificial agglomerate material in embodiments of the different aspects of the present disclosure is in the form of a slab and the term "slab" shall be understood to cover also tile, sheet, plank, board, or plate. Moreover, the term "slab" covers artificial material blocks which have a major dimension of at least 20 times its thickness.

In some embodiments, the slab of artificial agglomerate material has a surface, such as at least one of its major surfaces, polished, brushed, honed, buffed or sanded. In some embodiments, the slab of artificial agglomerate material has at least a polished surface, e.g., one or both of its largest surfaces.

The at least one groove created in the first layer extends at least partially through the first thickness of said first layer. In an embodiment, the at least one groove is extended through the complete thickness of the first layer. The depth of the al least one groove in the thickness of the first layer may vary along the groove.

The at least one groove may include a plurality of grooves, such as 2-10 grooves, intersecting or not. The at least one groove may extend through the length and width of the first layer, according to a predetermined path, and may extend from edge-to-edge of the first layer, such as, for example, through the full length or through full width of the first layer.

In an embodiment, the at least one groove extends along the length and/or width of the first layer following a sinuous path which includes at least one tight turn. By "tight turn" it is understood a change in the direction of the path (elongated line or band) in an angle of 90° or less.

In an embodiment, one or more additional grooves are created in the first layer by a tool different than the first tool. Optionally, the at least one groove is followed in its path by, and/or connected to, a portion of the one or more additional grooves.

The first conical element can be solid or hollow and can be made of any material compatible with the first mixture, such as plastic, metal or wood. The first conical element may be made of nylon.

In an embodiment, the first conical element is shaped as the frustum of a cone. In an embodiment, the first conical element is shaped as the frustum of a right cone. A right cone is a cone with an axis perpendicular to the circular base of the cone. The axis of the cone is the direction of the line segment from the vertex of the cone to the center of the circular base of the cone. For the right cone its axis is coincident with its height. In another embodiment, the first conical element is shaped as the frustum of an oblique (i.e. eccentric) cone. An oblique cone is a cone wherein the axis of the cone is not perpendicular to the base of the cone.

In another embodiment, the first conical element is shaped as a cone. In this embodiment, the first and second ends of the first conical element are respectively the vertex and the base of the cone. In an embodiment, the first end has a blunt or rounded shape. In this sense, the first conical element shaped as a cone can be also understood as a conical frustum with a small first end that substantially forms a vertex. The cone may be a right cone or an oblique cone.

In an embodiment, the height of the first conical element is from 30-110 mm, or 40-80 mm.

In an embodiment, the curved side surface of the first conical element defines a slant height with a length of 30-130 mm, or 30-100 mm.

In some embodiments, at least the curved side surface, or all surfaces, of the first conical element is smooth to avoid the first mixture adhering to it, thus minimizing interference with its function and facilitating its cleaning.

In an embodiment, the first end of the first conical element has an external diameter of 0.5-10 mm, or of 2-6 mm.

In an embodiment, the second end of the first conical element has an external diameter of 20-120 mm, or 20-90 mm.

When a range is indicated in the present document, both lower and upper limits are included in said range.

In an embodiment, the ratio of the external diameter of the second end to the external diameter of the first end ranges 2-25 times, or 5 - 20 times.

In an embodiment, the first conical element rotates at a rotation speed of 300 - 4000 rpm.

In an embodiment, the first robotic device translates the first conical element at least through portions of the first layer at a speed of 200-900 mm/s.

In an embodiment, the ratio between the rotation speed of the first conical element and the speed of its translation through at least some portion of the first layer is 2.5-7.5 revolutions per cm of translation.

In an embodiment, step c) comprises dispensing part of the second mixture - also - outside the at least one groove of the first layer. In an embodiment, when a second mixture is dispensed on the at least one groove according to step c), 80-100 wt% of the second mixture is dispensed inside the at least one groove and 0-20 wt%, or 1-20 wt%, of the second mixture is dispensed outside the at least one groove.

In an embodiment, the second mixture occupies less than 60 % v/v, or 10-60 % v/v, or 20-50% v/v of the volume of a cavity defined by a portion of the at least one groove.

In an embodiment, the second mixture is dispensed by the first dispenser. In another embodiment, the second mixture is dispensed by a second dispenser.

In an embodiment, the method comprises disaggregating the second mixture before it is dispensed into the at least one groove. In an embodiment, the second dispenser comprises a disaggregating device configured to interact with the second mixture for disaggregating the second mixture.

Advantageously, disaggregating any lumps, clumps or similar that may be present in the second mixture enhances the accuracy of the adjustment of the amounts of second mixture dispensed in different portions of the at least one groove in the first layer.

In an embodiment, the method comprises mechanizing at least one of the walls of a groove region of the at least one groove after the second mixture is dispensed into the groove region of the at least one groove.

In an embodiment, the mechanizing of the walls of a groove region of the at least one groove is performed by the first tool.

In another embodiment, the mechanizing of the walls of a groove region of the at least one groove is performed by a second tool. In an embodiment, the first and/or second tool is translated substantially tracing the path defined by the at least one wall of the at least one groove region having been filled by the second mixture, either contacting directly the wall portion, or next to it, so that in any case the wall portion is affected and/or mechanized by the second tool.

In an embodiment, the first robotic device is a robotic arm (such as an anthropomorphic robotic arm) or a Cartesian robot (such as an XYZ Cartesian robot).

The rotation of the first conical element may be affected by a first rotation means.

In an embodiment, the first rotation means comprises a motor, such as a motor of the servo type or a motor of pneumatic type.

In an embodiment, the first rotation means is mounted in the first robotic device and coupled with the first conical element, in such a way that the first rotation means are translated together with the first conical element.

In an embodiment, the second mixture is dispensed following a sinuous path which includes at least one tight turn.

In an embodiment, the first mixture comprises a first particulate material and a first binder. The first mixture may comprise 80-95 wt% of the first particulate material and 5-20 wt% of the first binder.

In an embodiment, the second mixture comprises a second particulate material and a second binder. The second mixture may comprise 80-95 wt% of the second particulate material and 5-20 wt% of the second binder.

In an embodiment, the first and/or second particulate materials is/are inorganic. In an embodiment, the first and/or second particulate materials comprise/s stone, stone-like and/or ceramic materials, such as quartz, silicate glass (virgin, frit or recycled), silica sand, feldspar, feldspathic sand, mirror, granite, basalt, (synthetic) cristobalite, dolomite, clay or porcelain ceramic, or mixtures thereof.

The term "binder" is understood in the art and hereby refers to a component that performs the function of holding together a particulate material or "filler" to form the artificial agglomerated material. The binder is unhardened or uncured when mixed with the particulate material, and it is subsequently hardened or cured to produce a hardened binder which gives cohesion and mechanical strength to the artificial agglomerated material.

In an embodiment, the first and/or second binder is an organic resin, hydraulic cement based and/or a geopolymer based material.

The first and/or second mixture may comprise one or several colorants (such as pigments or dyes) so that each mixture has the desired coloration.

The first and second binders may be of similar chemical nature, so as to be compatible and perform similarly during processing and during handling/use of the slab being manufactured. The first and second binders may be different or identical organic resins, such as translucent organic resins. The organic resin, within the concept of the present disclosure, may be thermosetting or thermoplastic. In certain embodiments, the organic resin is thermosetting, for example, an unsaturated polyester resin, an acrylic resin, a vinyl resin, or an epoxy resin. In some embodiments, the organic resin is an unsaturated polyester resin. For example, the first binder and the second binder may comprise the same type of polymer, monomer or combination of those, such as they both may comprise a polyester pre-prepolymer diluted in styrene.

In an embodiment, the first binder and/or the second binder are liquid or at least have some capacity to flow during the mixing with the respective particulate material, during dispensation of the mixtures, and/or during the compaction step. The two binders may produce, after hardening, hardened binders, which function holding (binding) the particulate materials together in the form of a slab.

Additives, such as colorants (dyes or pigments), curing catalysts, curing accelerators, adhesion promoters (e.g., silanes), antimicrobial agents, ultraviolet stabilizers, rheology modifiers, or mixtures thereof, can be included in the first and/or second mixtures. These types of additives and the proportion used thereof, are known in the state of the art. In some embodiments, these additives are present in the first and/or second mixtures in an amount of 0.01 wt% - 5 wt%, based on the weight of the respective mixture.

In some embodiments, the first mixture and the second mixture have different composition, or different particulate material particle size distribution, or both. In non-limiting embodiments, the first and second mixtures are selected to be visually distinguishable in the slabs being manufactured, at least after compacting and hardening.

The first and second mixtures may be prepared by adding their corresponding components to different first and second mixers, such as conventional industrial planetary mixers.

The skilled person readily understands that, when a composition or material is defined by the weight percentage values of all the components it comprises, these values can never sum up to a value which is greater than 100%. The amount of all components that said material or composition comprises adds up to 100% of the weight of the composition or material. When the amount of a component of a composition, mixture or material is given by a range with a lower limit of 0 wt% or 0,0 wt%, this means that said composition, mixture or material may either not comprise said component or comprise it in an amount not higher than the specified upper limit of the range. In the present disclosure, the described percentages refer to w/w percentage unless otherwise stated.

In an embodiment, the first mixture comprises large amounts of 80-95 wt% inorganic particulate material in relation to the unhardened binder. Such first mixture behaves similar to sticky wet sand, contributing to the sought wall compacting/smoothing effect. Also, the at least one groove maintains its shape for some time without collapsing, being possible filling it with a second mixture in a subsequent step before the combination of first and second mixtures is compacted and hardened.

In an embodiment, step b) further comprises creating one or more additional grooves in the first layer of the first mixture. In an embodiment, these additional grooves are created by a tool different from the first tool, such as a mechanizing tool shaped as a plow or as a rolling knife. That is, the at least one groove created by the first tool can be combined with one or more additional grooves created by these other tools. In an embodiment, a portion of the at least one groove created by the first tool according to the certain aspects of the present disclosure is followed in its path by, and/or connected to, a portion of an additional groove created by another tool, such as a rolling knife or a plow shaped tool. Advantageously, the combination of different grooves created by different tools contributes to the naturality and richness of the aesthetic effects achieved in the slab being manufactured according to the present disclosure.

In an embodiment, step d) further comprises covering the combination of first and second mixtures with a protective film or similar on its exposed surfaces before compacting. In a more particular embodiment, the compaction is conducted by a compacting press or a vacuum vibrocompacting press.

Once compacted, the combination of first and second mixtures proceeds to a hardening (or curing) step. In an embodiment, depending on the type of binder, as well as the use or not of any optional catalysts or accelerants, the compacted material is subjected to the effect of temperature. In another embodiment, the compacted material is left to cure at room temperature.

In an embodiment, the compacted combination of first and second mixtures is subjected to the effect of temperature in a hardening kiln or in a curing oven, suitably heated to 40 °C -120 °C, with residence times in the oven that in an embodiment vary between 10 minutes and 90 minutes.

In another embodiment, the hardening is performed by application of radiation, such as UV-radiation.

In a second aspect, the present disclosure provides a production system for the manufacture of artificial agglomerate material slabs, for example, by a method according to the first aspect, the production system comprising:
- a first dispenser for the dispensation of a first layer of a first mixture on a first surface,
- a first robotic device,
- a first tool mounted on the first robotic device, the first tool comprising a first conical element having a first end, a second end, an axis and a height, the first tool being arranged to be inserted into the first layer with the first end first, and
- first rotation means for rotating the first conical element around a first axis substantially parallel to the axis or the height of the first conical element.

As disclosed in connection with the method of the first aspect of the present disclosure, in the system of the second aspect the first end of the first conical element is narrower than the second end.

As disclosed in connection with the method of the first aspect of the present disclosure, in the system of the second aspect the first robotic device is configured to translate the first conical element following at least one predetermined path through the first layer. The first rotation means are configured for rotating the first conical element around a first axis substantially parallel to the axis or height of the first conical element as the first conical element is translated by the first robotic device following the at least one predetermined path in order to create at least one groove in the first layer.

The first mixture can be prepared in a first mixer, such as a planetary mixer. The first mixture can be transported, for instance by a conveyor, from the first mixer and dispensed onto the first surface by means of the first dispenser. Devices suitable as first dispenser are, for instance, the dispenser devices generally known for the dispensing of (unhardened) agglomerated mixtures in the manufacture of mineral or quartz agglomerated surfaces. In an embodiment, the first dispenser comprises a first hopper and a first conveyor belt, wherein the first hopper comprises a top opening and a bottom outlet opening. The top opening of the first hopper is configured to receive the first mixture from a first mixer and the first conveyor belt is positioned below the bottom outlet opening of the first hopper, to collect and/or extract the first mixture from the first hopper and deposit it onto the first surface. However, other configurations of the first dispenser are possible within the general concept of the aspects of the disclosure.

In some embodiments, the first dispenser may be movable along the length (this is, the longest dimension) of the first surface, which may correspond to the length (or longest dimension) of the slab being manufactured. For example, the first dispenser may deposit the first mixture covering the full width of the slab being manufactured, as it moves along the length of the first surface. The deposition of the first mixture forms the first layer on top of the first surface, which may have an essentially homogeneous thickness.

The first surface might be embodied by a sheet of kraft paper or plastic, which can be arranged on top of a conveyor or other part of a production line. In non-limiting embodiments, the first surface is part of a temporary mold, for instance, the bottom of a tray-shaped mold, which is used to retain the first mixture during the manufacturing of the slab.

In an embodiment, the first axis is centered in the first conical element, e.g. essentially parallel or superimposed with the height of the first conical element. In another embodiment, the first axis is outside or only partially inside the body of the first conical element, for instance, in the case of the first conical element having the shape of an eccentric cone or of a frustum of an eccentric cone. In another embodiment, the first axis is parallel or superimposed with the axis of the first conical element.

In an embodiment, the production system comprises a controller configured to control the operation of the first robotic device
- to insert the first conical element, with the first end first, into the first layer, and
- to translate the first conical element following at least one predetermined path through the first layer.

The controller shall be understood as a computer system (formed by one or several processing units) that programs and controls the operations of the first robotic device. Advantageously, the controller allows the operation of the first robotic device to be automated and to respond to pre-set or commanded instructions. For example, the first robotic device can be programmed through the controller to automatically move the first conical element in a translational movement in three perpendicular coordinates, i.e. x, y and z, through the first layer, following at least one trajectory or path (e.g. in x and y coordinates), as well as close to and away from the first surface in the direction of the thickness of the first layer (e.g. in the z coordinate).

In an embodiment, the controller is further configured to control the first rotation means to rotate the first conical element around the first axis, as the first conical element is translated by the first robotic device following the at least one predetermined path through the first layer. For example, the controller can control the first rotation means to start rotating the first conical element before, at the same time or after the first robotic device begins to translate the first conical element.

In an embodiment, the first dispenser is also configured to dispense the second mixture into the at least one groove created in the first layer of the first mixture. In this embodiment, the first dispenser selectively and separately dispenses the first mixture and the second mixture.

In another embodiment, the production system comprises a second dispenser configured to dispense a second mixture. The second mixture is dispensed by the second dispenser into the at least one groove created by the first tool in the first layer of first mixture.

In an embodiment, the second mixture can be obtained by mixing in a second mixer different than the first mixer. In an embodiment, the second mixture is transported from the second mixer to the first and/or the second dispenser by a conveyor.

In an embodiment, the second dispenser is mounted on the first robotic device.

In an embodiment, the production system comprises a second robotic device and the second dispenser is mounted on said second robotic device different that the first robotic device. In an embodiment, the second robotic device is a robotic arm or a Cartesian robot. By mounting the second dispenser on a robotic device, the second dispenser is easily translated over the first layer to the regions of the at least one groove in the first layer.

In an embodiment, the movement of the second dispenser and the amount of the second mixture dispensed in any location of the at least one groove and over the first layer is controlled and/or synchronized by a controller, so that the second mixture is dispensed into the different regions of the at least one groove. That is, a controller is configured to control the movement and/or the dispensing rate of the second dispenser. In an embodiment, the controller controls the robotic device on which the second dispenser is mounted and/or the second dispenser automatically and based on predefined instructions. Specifically, in an embodiment, the second dispenser is moved by the first or second robotic device following the paths defined by the at least one groove, as it dispenses the second mixture. Moreover, the filling degree, i.e. the volume of the groove filled by the second mixture, in the different portions of the at least one groove can be modified by controlling the dispensing rate of the second dispenser in the different portions of the at least one groove by the controller. In an embodiment, the controller configured to control the movement and/or the dispensing rate of the second dispenser is the same controller configured to control the operation of the first robotic device. In another embodiment, the production system comprises a first controller configured to control the operations of the first robotic device and a second controller configured to control the movement and/or the dispensing rate of the second dispenser.

In some embodiments, the second mixture does not fill completely the at least one groove. The lower the filling degree of a portion of the groove, the thinner and better defined the corresponding portion of the vein created in the slabs being manufactured is. The larger the filling degree of the portion of the groove, the wider and more visually distinguishable the corresponding portion of the vein created in the slabs being manufactured is. In an embodiment, the second mixture dispensed does not occupy the whole volume, or the section, of any portion of the at least one groove region.

The second dispenser, according to some embodiments, comprise a funnel having an inlet opening and an outlet opening, the outlet opening is narrower than the inlet opening. The funnel is configured to collect and focus the dispensation of the second mixture into the at least one groove. The second mixture is dispensed through the funnel, being transported from the inlet opening to the outlet opening, the inlet opening having a cross-section larger than the cross- section of the outlet opening. In certain embodiments of aspects of the disclosure, the outlet opening of the funnel is configured with a circular section, such as a circle. In certain embodiments, the outlet opening of the funnel is a cylinder or a conical frustum.

In an embodiment, the first tool of the production system is further configured to mechanize at least one of the walls of a groove region of the at least one groove.

In another embodiment, the production system comprises a second tool configured to mechanize at least one of the walls of a groove region of the at least one groove.

In an embodiment, the first and/or the second tool only mechanizes one of the walls of the at least one groove region while not mechanizing the other wall directly opposed through the width of the at least one groove. When only one of the walls is mechanized, special effects of randomness or imperfection are obtained, which gives naturality to the vein effect in the slab being manufactured.

In an embodiment, the second tool comprises a second conical element.

The second tool and its second conical element may have the same configuration of the first tool and its first conical element or a different one. The second tool and its second conical element can be used to mechanize the wall of the at least one groove region, by creating a new groove region outside the at least one groove region and parallel to the existing one. In this sense, a part of the first mixture is introduced into the at least one groove region already comprising the second mixture, layering and/or intermingling the first and second mixtures in one of the walls of the at least one groove region. The second tool and second conical element can be according to any of the embodiments of the first tool and first conical element disclosed herein.

In an embodiment, the second tool is mounted on a third robotic device.

In an embodiment, the second tool is mounted on the first robotic device.

In an embodiment, the first conical element and/or the second conical element is configured to rotate at a rotation speed of 300 - 4000 rpm.

In an embodiment, the first robotic device is configured to translate the first tool and/or the first conical element at least through portions of the first layer at a speed of 200-900 mm/s.

In an embodiment, the third robotic device is configured to translate the second tool and/or the second conical element at least thought portions of the first layer at a speed of 200-900 mm/s.

In an embodiment, the ratio between the rotation speed of the first conical element and the speed of its translation through at least some portion of the first layer is 2.5-7.5 revolutions per cm of translation.

In an embodiment, the ratio between the rotation speed of the second conical element, and the speed of its translation through at least some portion of the first layer is 2.5-7.5 revolutions per cm of translation.

In an embodiment, the second end of the first conical element and/or of the second conical element, has an external diameter of 10-120 mm, or 20-120 mm, or 20-90 mm.

In an embodiment, the first end of the first conical element and/or of the second conical element has an external diameter of 0.5-10 mm, or 2-6 mm.

In an embodiment, the ratio of the external diameter of the second end to the external diameter of the first end, in the first and/or second conical elements, ranges 2-25 times, or 5 - 20 times.

Second rotation means may be comprised in the production system, configured to affect rotation of the second conical element of the second tool. In an embodiment, the second rotation means is mounted on the third robotic device.

In an embodiment, the first rotation means and/or the second rotation means comprise/s a motor, such as a motor of the servo type or a motor of pneumatic type.

In an embodiment, the first rotation means is mounted in the first robotic device and coupled with the first conical element, in such a way that the first rotation means are translated together with the first conical element.

In an embodiment, the second rotation means is mounted on the third robotic device and coupled with the second conical element, in such a way that the second rotation means are translated together with the second conical element.

In an embodiment, the second dispenser comprises a disaggregating device configured to interact with the second mixture for disaggregating the second mixture before it is dispensed.

In an embodiment, the production system comprises a compacting means. In an embodiment, the compacting means comprises a compacting press or a vacuum vibrocompacting press.

In an embodiment, the production system comprises a hardening means. In an embodiment, the hardening means comprises heating and/or irradiating means. In an embodiment, the hardening means comprises a hardening kiln or a curing oven. In an embodiment the hardening means comprises a source of UV-radiation.

According to a third aspect, the disclosure provides an artificial agglomerate material slab being manufactured according to the method for manufacturing according to any one of the embodiments of the first aspect of the disclosure.

The term "slab" is intended to cover tile, sheet, board, plate, plank, and in general an essentially flat and uniform thickness article, such as of square or rectangular parallelepiped form.

In an embodiment, the dimensions of the slab are at least 1500 mm in length, at least 1000 mm in width and 4 to 40 mm in thickness; such as 2000 mm to 3500 mm in length, 1000 mm to 1800 mm in width and 4 mm to 40 mm in thickness.

The slab normally comprises a first major surface and a second major surface opposed to the first major surface through the thickness of the slab.

In an embodiment, the artificial agglomerate material slab has an apparent density in the range from 2000 kg/m³ - 2600 kg/m³, or from 2100 kg/m³-2500 kg/m³. Apparent density can be measured for example according to EN 14617-1:2013-08.

In an embodiment, the artificial agglomerate material slab includes a first hardened mixture and a second hardened mixture, corresponding to the first and second mixtures before hardening. In an embodiment, the second hardened mixture defines at least one vein exposed on and extending through the area of one major surface of the slab, wherein the at least one vein corresponds to the at least one groove created in the first layer. In the specific context of this disclosure, a vein is understood as an elongated line or band visually distinguishable from a background. In an embodiment, the second hardened mixture defines a plurality of veins, such as 2-10 veins, intersecting or not.

The at least one vein of the second hardened material exposed on one major surface of the slab may extend through the length and width of the slab following more or less regular paths, and they may extend from edge-to-edge of the slab, for example, extending through the full length or full width of the slabs being manufactured. The at least one vein may also extend fully or partially through the thickness of the slab. In an embodiment of the slab obtained by the method according to an aspect of the present disclosure, the at least one vein of the second hardened material extends following a sinuous path which includes at least one tight turn.

The artificial agglomerate material slab can be used for construction or decoration, for example for the manufacture of countertops, kitchen or vanity countertops, sinks, kitchen splashback, shower trays, wall or floor coverings, furniture cladding, tabletops, ventilated façade tiles, stovetops, profiles, fireplaces, stairs or the like.

In a fourth aspect, the disclosure defines the use of an agglomerated material slab according to the third aspect of the present disclosure for the manufacture of a countertop, kitchen or vanity countertop, sink, kitchen splashback, shower tray, wall or floor covering, furniture cladding, tabletop, ventilated façade tile, stovetop, stair-step, or fireplace.

In some embodiments, the agglomerated material slab is cut-to-size in the manufacture of these products, exposing the at least one vein of the second hardened material exposed on both one major surface and one edge of the slab.

In a fifth aspect, the disclosure herein provides a countertop, kitchen or vanity countertop, sink, kitchen splashback, shower tray, wall or floor covering, furniture cladding, tabletop, ventilated façade tile, stovetop, stair-step or fireplace made from an artificial agglomerate material slab according to some aspects of the present disclosure.

Unless specifically stated otherwise, or unless they are clearly incompatible, all the embodiments disclosed in relation to an aspect of the disclosure are also applicable to the other aspects. It should be understood that the scope of the present disclosure includes all the possible combinations of embodiments disclosed herein, either belonging to the same aspect or to different aspects of the disclosure.

### DESCRIPTION OF THE DRAWINGS

These and other features and advantages of the invention will be seen more clearly from the following detailed description of certain embodiments provided only by way of illustrative and non-limiting examples in reference to the attached drawings.
- Figure 1: This figures shows a schematic perspective view of a first tool according to aspects of the present disclosure.
- Figure 2: This figure shows a schematic front view of the first tool shown in figure 1.
- Figure 3: This figure shows a schematic cross-sectional view of the first tool shown in figure 1.
- Figure 4: This figure shows a schematic perspective view of the first tool shown in the previous figures mounted on a first robotic device according to an embodiment of aspects of the present disclosure.
- Figures 5A-5D: These figures show schematic views of different stages of a method according to an embodiment of an aspect of the present disclosure.
- Figure 6: This figure shows a schematic view of a portion of an exposed surface of a slab manufactured according to an aspect of the present disclosure.

### DETAILED DESCRIPTION OF ASPECTS OF THE DISCLOSURE

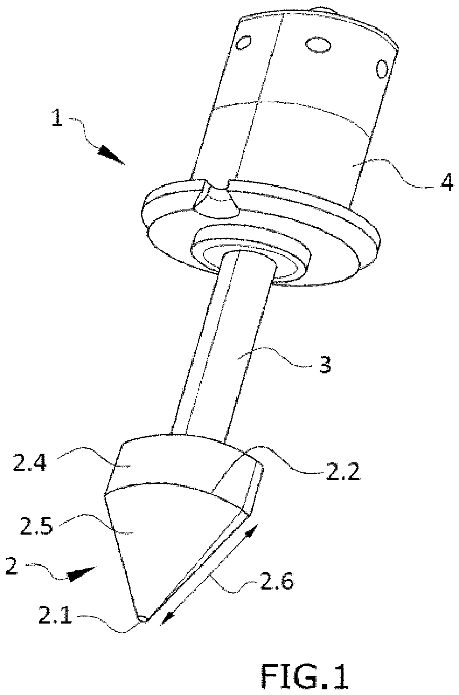

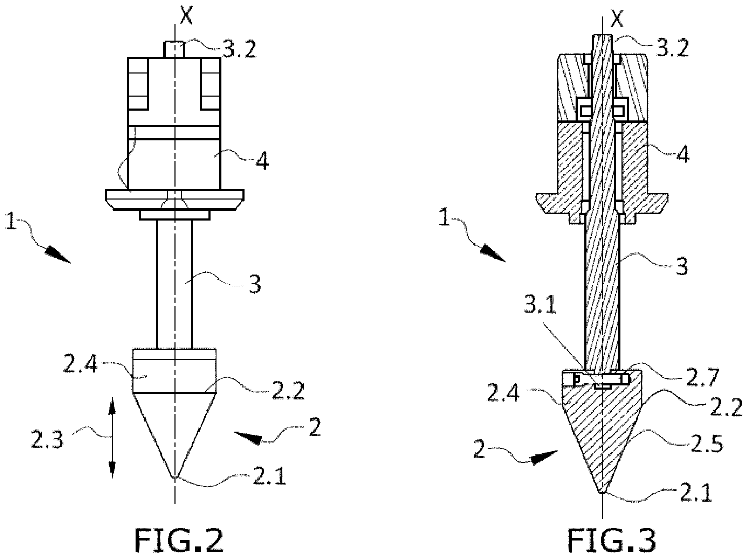

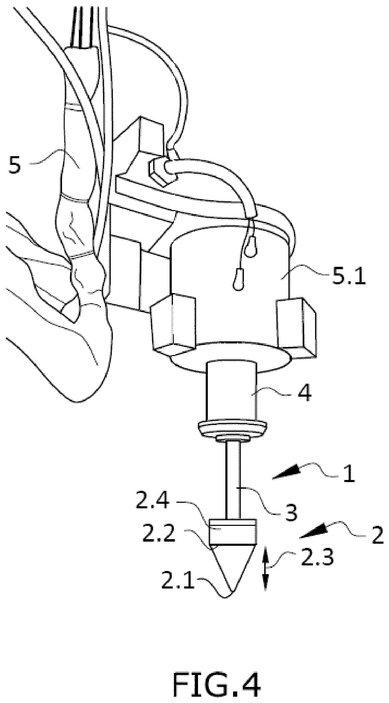

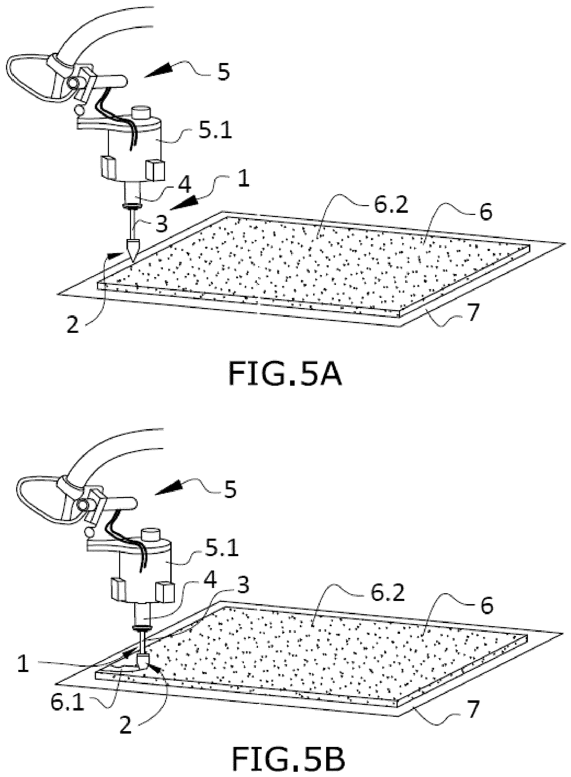

The present invention provides a method and a production system for the manufacture of artificial agglomerate material slabs (8), for example, by applying said method. The production system comprises a first dispenser (not shown) for the dispensation of a first layer (6) of a first mixture, a first robotic device (5) and a first tool (1) mounted on the first robotic device (5). This first tool (1) is configured to create at least one groove (6.1) in the first layer (6), the at least one groove (6.1) extending at least partially through a first thickness of the first layer (6) (as shown in figures 5A-5D). An embodiment of the first tool (1) is shown in figures 1-3 and an embodiment of the first tool (1) mounted on a first robotic device (5) is shown in figure 4.

The first tool (1) comprises a first conical element (2) having a first end (2.1), a second end (2.2), an axis and a height (2.3). The first tool (1) is arranged to be inserted into the first layer (6) with the first end (2.1) first for creating the at least one groove (6.1) in the first layer (6).

The production system also comprises first rotation means (5.1) for rotating the first conical element (2) around a first axis (X) substantially parallel to the axis or the height (2.3) of the first conical element. In an embodiment, the production system further comprises a second dispenser (not shown) for the dispensation of a second mixture. In some embodiments, the production system comprises a compacting means and a hardening means (not shown).

Specifically, figures 1-3 show different views of a first tool (1) according to an embodiment. In this embodiment, the first tool (1) comprises a first conical element (2) shaped as a frustum of a right cone, a shaft (3) and a coupling element (4) for coupling the first tool (1) to a first robotic device (not shown in these figures).

The first conical element (2) comprises a first end (2.1) and a second end (2.2) opposed along the height (2.3) of the first conical element (2). In this embodiment, the first end (2.1) has a small size compared to the size of the second end (2.2) and substantially forms a vertex. In this sense, the shape of the first conical element (2) resembles a right cone in this embodiment. In an embodiment, the first end (2.1) is rounded or blunt. In an example, the height (2.3) of the first conical element (2) is approximately 70 mm. In an example, the first end (2.1) has an external diameter of 2-4 mm, and the second end (2.2) has an external diameter of around 60 mm. In an embodiment, the material of the first conical element (2) is a low adherence plastic, such as nylon. In the embodiment shown in the figures, the first conical element (2) comprises a cylindrical part (2.4) extending from the second end (2.2) of the first conical element (2) and having an external diameter equal to the external diameter of the second end (2.2).

The side surface (2.5) of the first conical element (2), defined between the first end (2.1) and the second end (2.2), defines a slant height (2.6). In an example, the slant height (2.6) has a length of 30-130 mm, or 30-100 mm.

In the embodiment shown, the side surface (2.5) of the first conical element (2) is smooth. In an embodiment not shown, the side surface of the first conical element (2) may be configured to have an embossment or a helical thread running from the second end (2.2) to the first end (2.1). The embossment would generate groove walls with a certain relief, which result in appealing visual effects in the slab being manufactured. Also, the helical thread would serve to extract the first mixture out from the groove more efficiently.

As shown on figures 1-3, the first conical element (2) is coupled and locked by a locking element (2.7) to a first end (3.1) of the elongated shaft (3) in the form of a rod, made, for example, of stainless steel. The coupling element (4) is arranged at the proximity of a second end (3.2) of the elongated shaft (3) opposed to the first end (3.1), in a manner, that movement of the shaft (3) relative to the coupling element (4) is locked in the direction of the length of the shaft (3), corresponding to the first axis (X), but the shaft (3) can be freely rotated around the axis defined by its length, i.e. the first axis (X). In the embodiment shown in the figures, the first axis (X) is substantially parallel to the height (2.3) of the first conical element (2). In this embodiment, the first axis (X) is substantially coincident with the height (2.3) of the first conical element (2). In this embodiment, the axis of the first conical element (2) is coincident with the height (2.3) of the first conical element (2).

As shown in figure 4, the coupling element (4) is used for mounting the first tool (1) on a first robotic device (5), which in an embodiment is an anthropomorphic articulated robotic arm. The first robotic device (5) is provided with first rotation means (5.1) for rotating the first conical element (2). In an embodiment, the first rotation means are embodied as a servo motor engaged with the second end of the elongated shaft (3). By actuating the servo motor, torque is transmitted to the elongated shaft (3), which is rotated around the first axis (X), and makes the first conical element (2) rotate.

In an embodiment, the production system further comprises a controller (not shown) that is configured to operate the first robotic device (5) to insert the first conical element (2), with the first end (2.1) first, into the first layer (6), and to translate the first conical element (2) following at least one predetermined path through the first layer (6). In an embodiment, the controller is also configured to control the first rotation means (5.1) to rotate the first conical element (2) around the first axis (X), as the first conical element (2) is translated by the first robotic device (5) following the at least one predetermined path through the first layer (6). In an embodiment, the speed and torque of the first rotation means (5.1), or the servo motor, are controlled and synchronized with the movements of the first robotic device (5) by the controller. The controller may be embodied by a computer system.

In an embodiment not shown, the production system further comprises a first mixer for preparing the first mixture (6.2) and/or a second mixer for preparing the second mixture.

According to an embodiment, the first dispenser comprises a first hopper (not shown) and a first conveyor belt (not shown), wherein the first hopper comprises a top opening and a bottom outlet opening. The top opening of the first hopper is configured to receive the first mixture from a first mixer and the first conveyor belt is positioned below the bottom outlet opening of the first hopper, to collect and/or extract the first mixture from the first hopper and deposit it onto the first surface (7).

In an embodiment not shown, the second dispenser is configured for dispensing the second mixture in the at least one groove (6.1). The second dispenser can be configured as a dispenser mounted on a second robotic device (different than the first robotic device (5)), such as those disclosed in WO 2019101823 A1.

According to an embodiment, the second dispenser comprises a feeding hopper (not shown) that receives the second mixture from the second mixer in a top inlet opening thereof, and a belt positioned under a bottom outlet opening of the hopper, which collects and/or extracts the second mixture from the hopper and deposits it into the at least one groove (6.1).

In certain embodiments not shown, the second dispenser comprises a disaggregating device configured to interact with the second mixture for disaggregating it before it is dispensed to the at least one groove (6.1). The disaggregating device may comprise a rod located over across the width of the belt of the second dispenser, the rod being provided with protruding prongs which, when the rod is rotated, interact mechanically with the second mixture disaggregating it, e.g. as it is transported on top of the belt from the hopper to the discharge area. In particular, the disaggregating device disaggregates any lumps, clumps, or similar, that may be present in the second mixture.

In an embodiment, the second dispenser comprises a funnel (not shown) for collecting and focusing the second mixture being dispensed preferentially into the groove (6.1). The funnel may be located next to the area where the second mixture is discharged from the belt towards the groove (6.1). The funnel may be configured to have an inlet opening where the second mixture is discharged from the belt under the hopper. The funnel may also have an outlet opening from which the second mixture is dispensed into the groove (6.1), as the second dispenser moves following the paths of the groove (6.1). The outlet opening of the funnel may have a circular section, such as a circle, for instance, it may be embodied by a cylinder or a conical frustum.

In an embodiment, the production system also comprises a second tool (not shown) configured to mechanize at least one of the walls of a groove region of the groove (6.1) already created. This second tool may be mounted on a third robotic device (different from the first robotic device used to translate the first conical element (2), and from the second robotic device optionally used to carry the second dispenser) and can be also controlled by the controller. In an embodiment, the second tool comprises a second conical element.

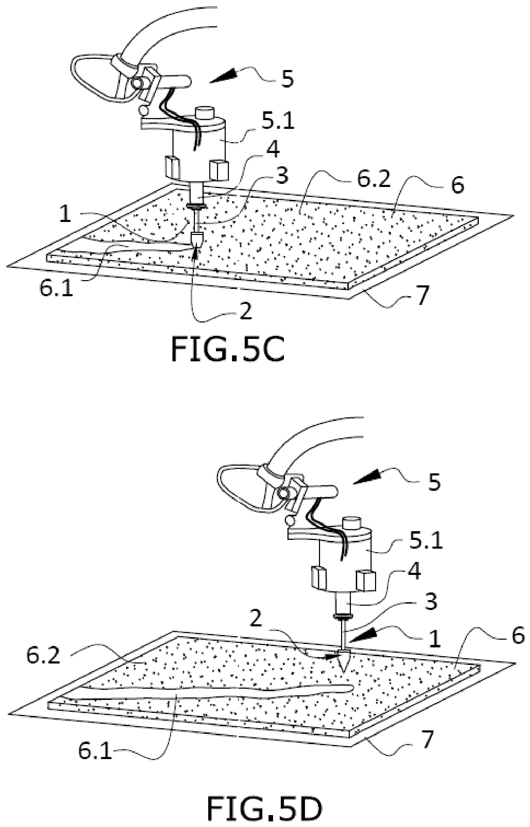

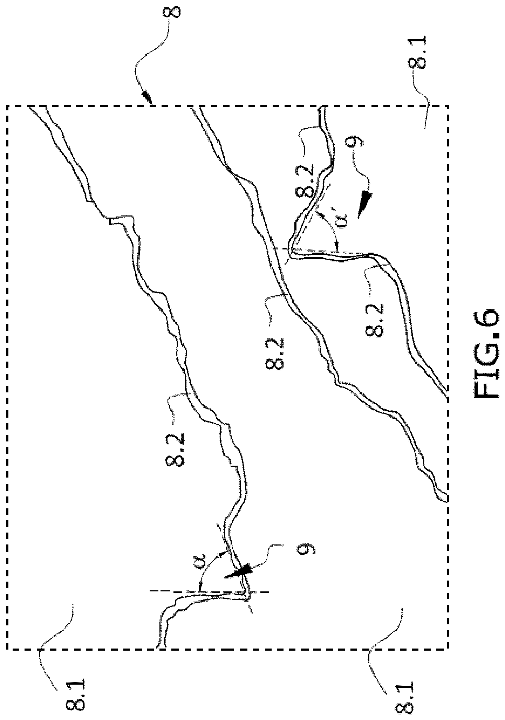

An embodiment of a method for manufacturing an artificial agglomerate material slab (8) according to aspects of the present disclosure will be described with reference to figures 5 and 6. The method for manufacturing an artificial agglomerate material slab (8) comprises the following steps:
a) dispensing a first layer (6) of a first mixture (6.2) onto a first surface (8), the first layer (6) having a first thickness;
b) creating at least one groove (6.1) in the first layer (6) by a first tool (1), the at least one groove (6.1) extending at least partially through the first thickness of the first layer (6);
c) dispensing a second mixture into the at least one groove (6.1) of the first layer (6); and
d) compacting and hardening the combination of the first and second mixtures.

According to step a), the dispensing of the first mixture to form the first layer (6) is performed in a first dispensation station (not shown) (8). The thickness of the first layer (6) is essentially homogeneous through its length and width, and can be set to different values depending on the thickness of the slab being manufactured. In an embodiment, the length, width and thickness of the first layer (6) exceeds slightly the dimensions of the slab being manufactured, to take into account the shrinking that the first mixture might suffer during the subsequent steps of the manufacturing process, such as compaction and hardening. In an embodiment, the first layer (6) is dispensed in a substantially horizontal position with the thickness direction of the first layer (6) essentially coinciding with the first axis (X).

In an embodiment, the first mixture (6.2) is prepared in a first mixer, such as a planetary mixer. The first mixture (6.2) is transported, for instance by a conveyor, from the first mixer and dispensed onto a first surface (7) by means of the first dispenser (not shown). Devices suitable as first dispenser are, for instance, the dispenser devices generally known for the dispensing of (unhardened) agglomerated mixtures in the manufacture of mineral or quartz agglomerated surfaces. The first dispenser may comprise a feeding first hopper that receives the first mixture from the first mixer through its top opening and a first conveyor belt positioned below the bottom outlet opening of the first hopper, which collects and/or extracts the first mixture from the first hopper and deposits it onto the first surface (7).

In an embodiment, the first dispenser is movable along the length (this is, the longest dimension) of the first surface (7), which suitably corresponds to the length (or longest dimension) of the slab (8) being manufactured. Also, the first dispenser deposits the first mixture (6.2) covering the full width of the slab (8) being manufactured, as it moves along the length of the first surface (7). In an embodiment, the first surface (7) is a layer of paper kraft.

In an embodiment, the first mixture (6.2) is prepared by mixing 85 - 95 wt% of a first particulate material and 5 - 15 wt% of a first binder, both in relation to the weight of the first mixture (6.2). In an embodiment, the first particulate material comprises different amounts of granulates and powders, having different particle sizes, of one or several of quartz, synthetic cristobalite, feldspar and recycled silicate glass. In an embodiment, the first binder comprises a liquid translucent unsaturated polyester resin. In an embodiment, the first mixture also comprises from 0.5 - 3.0 wt% of first colorant mixture and additives comprising one or more of coupling agents, catalysts, accelerants, among others.

According to step b), at least one groove (6.1) is created in the first layer (6) by a first tool (1), the at least one groove (6.1) extending at least partially through the first thickness of the first layer (6). Figures 5A-5D show different stages in the creation of the groove (6.1). These figures show the first layer (6) of the first mixture (6.2) having been dispensed by the first dispenser (not shown) onto the first surface (7), in the first dispensation station as already explained above. Specifically, a groove (6.1) is created in the first layer (6) of first mixture (6.2) with a first tool (1) as the one shown in figures 1-4, mounted on a first robotic device (5). The first tool (1) with the first conical element (2) is translated by the first robotic device (5) to an initial position over the first layer (6) (shown in figure 5A). Then, the first rotating means (5.1), such as a servo motor, is actuated to rotate the elongated shaft (3) and to rotate the first conical element (2) about the first axis (X) parallel to the axis or height direction of the first conical element (2), and in this case, parallel to the thickness direction of the first layer (6). Shortly after, the first robotic device (5) translates the first conical element (2) to insert it into some depth of the thickness of the first layer (6), with the first end (2.1) (or vertex) first. The first conical element (2) is translated by the first robotic device (5) through the length and width of the first layer (6) following a defined path, as the rotation of the first conical element (2) is continued, as shown in figures 5B and 5C. With this, a groove (6.1) having a predefined shape as desired can be created. The movement of the first robotic device (5) can be previously programmed and synchronized with the rotation speed of the first conical element (2). Once the groove (6.1) with the desired shape is created, the first robotic device (5) separates the first conical element (2) from the first layer (6), e.g. by raising it, as shown in figure 5D.

Alternatively, the rotation of the first conical element (2) may be started at the same time or after the first conical element (2) has been inserted into the thickness of the first layer (6). The rotation of the first conical element (2) may be continued while it is translated through the full path of the groove (6.1) in the first layer (6), or the rotation might be interrupted at some portions of the groove (6.1).

The rotation speed of the first conical element (2) may be set to a fix value while one groove (6.1) is created, or might be varied. The rotation speed of the first conical element (2) in this example is set to approximately 2000 rpm at least in a portion of the groove (6.1) being created, or in the complete groove (6.1) being created.

The speed of the translation of the first conical element (2) by the first robotic device (5) through the first layer (6), in this example, is set to 500 m/s at least in a portion of the groove (6.1) being created, or in the complete groove (6.1) being created.

By controlling the depth to which the first conical element (6) is inserted into the thickness of the first layer (6) by a controller, the cross-section and shape of the groove (6.1), (and then, also of the vein effect created in the slab (8) being manufactured) can be adjusted. Inserting the first conical element (6) more deeply into the thickness results in a groove (6.1) (and vein) that extends more through the slab thickness, and which is wider at the surface of the slab facing up during this manufacturing step. By contrast, inserting the first conical element (2) less into the thickness results in a groove (6.1) (or vein) which is more superficial, and which looks narrower at the surface of the first layer (6) facing up during this manufacturing step. The shape of the groove (6.1), and of the corresponding vein in the slab (8) being manufactured, can be further controlled by the shape of the first conical element (2). Thus, a first conical element (2) with a small first end (2.1) results in a groove (6.1) (and vein) with a sharp V-section, while a larger first end (2.1) results in a groove (6.1) (or vein) with a section resembling more a frustum or a cylinder.

The above process may be repeated as desired, to create any number of grooves (6.1) and any combination of their paths and shapes. The grooves (6.1) created with the first conical element (2) might be combined with additional grooves created in the first layer (6) by any other means known in the art, such as rolling knifes.

According to step c), a second mixture is dispensed on the groove (6.1) already created on the first layer (6) of the first mixture (6.2) in step b). In an embodiment, the second mixture is previously prepared in a second mixer (not shown) by combining 85-95 wt% of a second particulate material and 5-15 wt% of a second binder, both based on the weight of the second mixture. In an embodiment, the second particulate material comprises different amounts of granulates and powders, having different particle sizes, of one or several of quartz, synthetic cristobalite, feldspar and recycled silicate glass. In an embodiment, the second binder comprises a liquid translucent unsaturated polyester resin. In an embodiment, the second mixture also comprises from 0.5 - 3.0 wt% of a second colorant mixture and additives comprising coupling agents, catalysts, accelerants, among others, based on the weight of the second mixture.

In an embodiment, there is a second dispensation station, downstream from the first dispensation station, with a second dispenser (not shown) mounted on a second robotic device (not shown), different from the first robotic device, for dispensing the second mixture into the groove (6.1).

In an embodiment, the second mixture is dispensed by the second dispenser in controlled variable amounts along the groove (6.1). The dispensing of the second mixture by the second dispenser is predominantly made into the groove (6.1). However, it is possible to dispense the second mixture also partially outside the groove (6.1), for example dispensing 0 - 15 wt%, or 0 - 10 wt% of the second mixture outside the groove (6.1). The filling degree of the different zones or regions of the groove (6.1) can be adjusted. In some embodiments, the second mixture occupies around 40-60 % (v/v) of the volume of the cavity defined by a groove region of the at least one groove (6.1).

In an embodiment, the components of the first (6.2) and second mixtures are selected so that the first (6.2) and second mixtures are different (such as having different composition and/or different particulate material particle size distribution), and/or they are visually distinguishable after hardening.

In an embodiment, the method further comprises after step c) the step of mechanizing at least one of the walls, or only one of the walls, of a groove region of the at least one groove (6.1) by means of a second tool. In an embodiment, the second tool comprises a second conical element. In some embodiments, the second tool is translated substantially retracing the path defined by the wall or walls of the region of the at least one groove (6.1). Also in some embodiments, the second conical element is rotated around its axis or its height as it is translated.

According to step d), once the second mixture is dispensed, the combination of the first and second mixtures is compacted and hardened (not shown). In an embodiment, the combination of first (6.2) and second mixtures is covered with a protective sheet on the exposed upper side of the first layer, e.g., with a sheet of Kraft paper, before it is transferred to a compaction station. In an embodiment, the compaction station comprises a vacuum vibrocompaction press, where the air in the combination of first and second mixtures is evacuated with simultaneous pressing under vibration. In an embodiment, the combination of first (6.2) and second mixtures is conveyed inside a compaction zone of a compaction press, wherein it is introduced into a sealable chamber. This chamber is than sealed and vacuum is created with suitable exhaust pumps. Once the desired vacuum level (e.g., 5 mbar - 40 mbar) is reached, the press ram exerts a compaction pressure simultaneously with the application of a vertical vibration of the ram (e.g., oscillating at 2.000 Hz- 4.000 Hz). During vacuum vibrocompaction, the air trapped in first and second mixtures is substantially evacuated.

In an embodiment, after compaction, the compacted combination of mixtures is transferred to a hardening station where it is hardened - or cured - in a kiln for about 40-60 minutes at 70-110°C. However, other types of hardening and curing are possible and within the aspects of the present disclosure, such as hardening by application of radiation, such as UV-radiation. After hardening, the artificial agglomerate material slab (8) is obtained comprising a combination of first hardened mixture and second hardened mixture.

In an embodiment, the obtained slab (8) of agglomerate material is allowed to cool down after the hardening stage.

After hardening and, given the case, cooling, the slab (8) of artificial agglomerate material obtained may be calibrated, cut and/or trimmed to the desired final dimensions, e.g., of 3.3 x 1.6 m. Further one or both of the two major surfaces of the slab (8) of artificial agglomerate material may be finished, such as polished, honed, and/or brushed, to enhance the appreciation of the chromatic effects created.

Figure 6 shows an example of a portion of an exposed major surface of a slab (8) obtained according to the manufacturing method and/or using the production system according to aspects of the present disclosure, both already described above.

The slab (8) is comprised predominantly of hardened first mixture (8.1) conforming the majority of the slab (8) with the second hardened mixture (8.2) defining multiple veins exposed on this major surface, and extending through the length and width of the slab (8). Although not visible in figure 6, the veins extend also partially or fully through the thickness of the slab (8). In the embodiment shown in figure 6, the veins show an elongated shape with varying width along their length, following a sinuous path including tight turns (9) with a change in their main path direction defining angles α and α' of 90° or lower. The edges or boundaries between the first hardened mixture and the second hardened mixtures are well defined, even in the portions including the tight turns, without occurrence of significant hairiness or fuzziness.

In an embodiment, the artificial agglomerate material slab (8) has an apparent density of 2100 kg/m³ - 2500 kg/m³. The water absorption of the artificial agglomerate material slab (8) does not exceed 0.10 %, or 0.07%, or 0.05%, according to EN-14617-1:2013.

## Claims

1. A method for manufacturing an artificial agglomerate material slab (8), the method comprising the following steps:
a) dispensing a first layer (6) of a first mixture (6.2) onto a first surface (7), the first layer (6) having a first thickness;
b) creating at least one groove (6.1) in the first layer (6) by a first tool (1), the at least one groove (6.1) extending at least partially through the first thickness of the first layer (6);
c) dispensing a second mixture into the at least one groove (6.1) of the first layer (6); and
d) compacting and hardening the combination of the first and second mixtures;
wherein:
- the first tool (1) is mounted on a first robotic device (5);
- the first tool (1) comprises a first conical element (2);
- the first conical element (2) has a first end (2.1), a second end (2.2), an axis and a height (2.3), the first end (2.1) being narrower than the second end (2.2); and
**characterized in that**:
- the at least one groove (6.1) is created in the first layer (6) by inserting the first conical element (2), with the first end (2.1) first, into the first thickness of the first layer (6), and by rotating the first conical element (2) around a first axis (X) that is substantially parallel to the axis or the height (2.3) of the first conical element (2), as the first conical element (2) is translated by the first robotic device (5) following at least one predetermined path through the first layer (6).

2. The method for manufacturing according to claim 1, wherein the second mixture occupies less than 60 % v/v, or 10-60 % v/v, or 20-50% v/v of the volume of the cavity defined by a portion of the at least one groove (6.1).

3. The method for manufacturing according to any one of the previous claims, further comprising disaggregating the second mixture before it is dispensed into the at least one groove (6.1).

4. The method for manufacturing according to any one of the previous claims, further comprising mechanizing at least one of the walls of a groove region of the at least one groove (6.1) by a second tool after the second mixture is dispensed into the groove region of the at least one groove (6.1).

5. The method of manufacturing according to any one of the previous claims, wherein one or more additional grooves are created in the first layer (6) by a tool different than the first tool, and optionally wherein the at least one groove (6.1) is followed in its path by, and/or connected to, a portion of the one or more additional grooves.

6. The method according to any one of the previous claims, wherein:
- the first mixture comprises a first particulate material and a first binder, and preferably the first mixture comprises 80-95 wt% of the first particulate material and 5-20 wt% of the first binder; and/or
- the second mixture comprises a second particulate material and a second binder, and preferably the second mixture comprises 80-95 wt% of the second particulate material and 5-20 wt% of the second binder.

7. A production system for the manufacture of artificial agglomerate material slabs (9), for example by a method according to any of claims 1-6, comprising:
- a first dispenser for the dispensation of a first layer (6) of a first mixture on a first surface,
- a first robotic device (5),
- a first tool (1) mounted on the first robotic device (5), the first tool (1) comprising a first conical element (2) having a first end (2.1), a second end (2.2), an axis and a height (2.3), the first end (2.1) being narrower than the second end (2.2),
**characterized in that**:
the first tool (1) is arranged to be inserted into the first layer (6) with the first end (2.1) first, wherein the first robotic device (5) is configured to translate the first conical element (2) following at least one predetermined path through the first layer (6), and **in that** the system further comprises:
- first rotation means (5.1) for rotating the first conical element (2) around a first axis (X) substantially parallel to the axis or height (2.3) of the first conical element (2) as the first conical element (2) is translated by the first robotic device (5) following the at least one predetermined path in order to create at least one groove in the first layer (6).

8. The production system according to claim 7, further comprises a second dispenser for the dispensation of a second mixture, wherein the second dispenser is mounted on a second robotic device different than the first robotic device.

9. The production system according to claim 8, wherein the second dispenser comprises a funnel having an inlet opening and an outlet opening, the cross-section of the inlet opening being larger than the cross-section of the outlet opening, and wherein the outlet opening have a circular section.

10. The production system according to any one of claims 7-9, further comprising a second tool configured to mechanize at least one of the walls of a groove region of the at least one groove (6.1).

11. The production system according to claim 10, wherein the second tool comprises a second conical element and/or the second tool is mounted on a third robotic device.

12. The method according to any one of claims 1-6 or the production system according to any one of claims 7-11, wherein:
- the first conical element (2) is configured to rotate at a rotation speed of 300 - 4000 rpm; and/or
- the first robotic device (5) is configured to translate the first conical element (2) at least through portions of the first layer (6) at a speed of 200-900 mm/s.

13. The method according to any one of claims 1-6 or 12, wherein the ratio between the rotation speed of the first conical element (2) and the speed of its translation through at least some portion of the first layer (6) is 2.5-7.5 revolutions per cm of translation.

14. The method for manufacturing according to any one of claims 1-6, 12 or 13, or the production system according to any one of claims 7-12, wherein:
- the first end (2.1) of the first conical element (2) has an external diameter of 0.5-10 mm, optionally of 2-6 mm; and/or
- the second end (2.2) of the first conical element (2) has an external diameter of 20-120 mm or of 20-90 mm; and/or
- the ratio of the external diameter of the second end (2.2) to the external diameter of the first end (2.1) ranges 2-25 times, optionally 5 - 20 times.

15. The production system according to any one of claims 7-12 or 14, wherein the first rotation means (5.1), such as a servo or a pneumatic motor, is mounted in the first robotic device (5) and coupled with the first conical element (2), in such a way that the first rotation means (5.1) are translated together with the first conical element (2).

## Patentansprüche

1. Verfahren zur Herstellung einer Platte (8) aus künstlichem Agglomerat-Material, wobei das Verfahren die folgenden Schritte aufweist:
a) Auftragen einer ersten Schicht (6) einer ersten Mischung (6.2) auf eine erste Oberfläche (7), wobei die erste Schicht (6) eine erste Dicke aufweist;
b) Erzeugen mindestens einer Nut (6.1) in der ersten Schicht (6) durch ein erstes Werkzeug (1), wobei sich die mindestens eine Nut (6.1) zumindest teilweise durch die erste Dicke der ersten Schicht (6) erstreckt;
c) Abgeben einer zweiten Mischung in die mindestens eine Nut (6.1) der ersten Schicht (6); und
d) Verdichten und Aushärten der Kombination der ersten und der zweiten Mischung;
wobei:
- das erste Werkzeug (1) an einer ersten Robotervorrichtung (5) angebracht ist;
- das erste Werkzeug (1) ein erstes konisches Element (2) aufweist;
- das erste konische Element (2) ein erstes Ende (2.1), ein zweites Ende (2.2), eine Achse und eine Höhe (2.3) aufweist, wobei das erste Ende (2.1) schmaler ist als das zweite Ende (2.2); und
**dadurch gekennzeichnet, dass**:
- die mindestens eine Nut (6.1) in der ersten Schicht (6) erzeugt wird, indem das erste konische Element (2) mit dem ersten Ende (2.1) voran in die erste Dicke der ersten Schicht (6) eingeführt wird und indem das erste konische Element (2) um eine erste Achse (X) gedreht wird, die im Wesentlichen parallel zur Achse oder zur Höhe (2.3) des ersten konischen Elements (2) verläuft.3) des ersten konischen Elements (2) ist, während das erste konische Element (2) von der ersten Robotervorrichtung (5) mindestens einem vorbestimmten Weg folgend durch die erste Schicht (6) translatiert wird.

2. Herstellungsverfahren nach Anspruch 1, wobei die zweite Mischung weniger als 60 Vol.-%, oder 10-60 Vol.-%, oder 20-50 Vol.-% des Volumens des Hohlraums einnimmt, der durch einen Abschnitt der mindestens einen Nut (6.1) definiert ist.

3. Herstellungsverfahren nach einem der vorhergehenden Ansprüche, das ferner das Disaggregieren der zweiten Mischung aufweist, bevor sie in die mindestens eine Nut (6.1) abgegeben wird.

4. Herstellungsverfahren nach einem der vorhergehenden Ansprüche, das ferner das Bearbeiten mindestens einer der Wände eines Nutbereichs der mindestens einen Nut (6.1) durch ein zweites Werkzeug aufweist, nachdem die zweite Mischung in den Nutbereich der mindestens einen Nut (6.1) abgegeben wurde.

5. Herstellungsverfahren nach einem der vorhergehenden Ansprüche, wobei eine oder mehrere zusätzliche Nuten in der ersten Schicht (6) durch ein anderes Werkzeug als das erste Werkzeug erzeugt werden, und wobei optional die mindestens eine Nut (6.1) in ihrem Verlauf von einem Teil der einen oder mehreren zusätzlichen Nuten gefolgt wird und/oder mit diesem verbunden wird.

6. Verfahren nach einem der vorhergehenden Ansprüche, wobei:
- die erste Mischung ein erstes teilchenförmiges Material und ein erstes Bindemittel aufweist, und vorzugsweise die erste Mischung 80-95 Gew.-% des ersten teilchenförmigen Materials und 5-20 Gew.-% des ersten Bindemittels aufweist; und/oder
- die zweite Mischung ein zweites teilchenförmiges Material und ein zweites Bindemittel aufweist, und vorzugsweise die zweite Mischung 80-95 Gew.-% des zweiten teilchenförmigen Materials und 5-20 Gew.-% des zweiten Bindemittels aufweist.

7. Produktionssystem zur Herstellung von Platten (9) aus künstlichem Agglomerat-Material, beispielsweise durch ein Verfahren nach einem der Ansprüche 1 bis 6, das aufweist:
- einen ersten Spender zur Abgabe einer ersten Schicht (6) einer ersten Mischung auf eine erste Oberfläche,
- eine erste Robotervorrichtung (5),
- ein erstes Werkzeug (1), das an der ersten Robotervorrichtung (5) angebracht ist, wobei das erste Werkzeug (1) ein erstes konisches Element (2) mit einem ersten Ende (2.1), einem zweiten Ende (2.2), einer Achse und einer Höhe (2.3) aufweist, wobei das erste Ende (2.1) schmaler ist als das zweite Ende (2.2),
**dadurch gekennzeichnet, dass**:
- das erste Werkzeug (1) eingerichtet ist, mit dem ersten Ende (2.1) zuerst in die erste Schicht (6) eingeführt zu werden, wobei die erste Robotervorrichtung (5) konfiguriert ist, das erste konische Element (2) mindestens einer vorbestimmten Bahn folgend durch die erste Schicht (6) zu verschieben, und dadurch, dass das System ferner aufweist:
- eine erste Rotationseinrichtung (5.1) zum Drehen des ersten konischen Elements (2) um eine erste Achse (X), die im Wesentlichen parallel zur Achse oder Höhe (2.3) des ersten konischen Elements (2) verläuft, während das erste konische Element (2) von der ersten Robotervorrichtung (5) der mindestens einen vorbestimmten Bahn folgend translatiert wird, um mindestens eine Nut in der ersten Schicht (6) zu erzeugen.

8. Produktionssystem nach Anspruch 7, das ferner einen zweiten Spender zur Abgabe einer zweiten Mischung aufweist, wobei der zweite Spender an einer zweiten Robotervorrichtung angebracht ist, die sich von der ersten Robotervorrichtung unterscheidet.

9. Produktionssystem nach Anspruch 8, wobei der zweite Spender einen Trichter mit einer Einlassöffnung und einer Auslassöffnung aufweist, wobei der Querschnitt der Einlassöffnung größer ist als der Querschnitt der Auslassöffnung, und wobei die Auslassöffnung einen kreisförmigen Querschnitt aufweist.

10. Produktionssystem nach einem der Ansprüche 7 bis 9, das ferner ein zweites Werkzeug aufweist, das konfiguriert ist, mindestens eine der Wände eines Nutbereichs der mindestens einen Nut (6.1) zu bearbeiten.

11. Produktionssystem nach Anspruch 10, wobei das zweite Werkzeug ein zweites konisches Element aufweist und/oder das zweite Werkzeug an einer dritten Robotervorrichtung angebracht ist.

12. Verfahren nach einem der Ansprüche 1 bis 6 oder Produktionssystem nach einem der Ansprüche 7 bis 11, wobei:
- das erste konische Element (2) konfiguriert ist, sich mit einer Rotationsgeschwindigkeit von 300 - 4000 U/min zu drehen; und/oder
- die erste Robotervorrichtung (5) konfiguriert ist, das erste konische Element (2) mindestens durch Abschnitte der ersten Schicht (6) mit einer Geschwindigkeit von 200-900 mm/s zu bewegen.

13. Verfahren nach einem der Ansprüche 1 bis 6 oder 12, wobei das Verhältnis zwischen der Rotationsgeschwindigkeit des ersten konischen Elements (2) und der Geschwindigkeit seiner Translation durch mindestens einen Abschnitt der ersten Schicht (6) 2,5 bis 7,5 Umdrehungen pro cm Translation beträgt.

14. Verfahren zur Herstellung nach einem der Ansprüche 1 bis 6, 12 oder 13 oder Produktionssystem nach einem der Ansprüche 7 bis 12, wobei:
- das erste Ende (2.1) des ersten konischen Elements (2) einen Außendurchmesser von 0,5-10 mm, optional von 2-6 mm, aufweist; und/oder
- das zweite Ende (2.2) des ersten konischen Elements (2) einen Außendurchmesser von 20-120 mm oder von 20-90 mm aufweist; und/oder
- das Verhältnis des Außendurchmessers des zweiten Endes (2.2) zum Außendurchmesser des ersten Endes (2.1) das 2-25 fache, gegebenenfalls das 5-20 fache beträgt.

15. Produktionssystem nach einem der Ansprüche 7 bis 12 oder 14, wobei die erste Rotationseinrichtung (5.1), wie z.B. ein Servo- oder ein Pneumatikmotor, in der ersten Robotervorrichtung (5) angebracht und mit dem ersten konischen Element (2) gekoppelt ist, derart, dass die erste Rotationseinrichtung (5.1) zusammen mit dem ersten konischen Element (2) translatiert wird.

## Revendications

1. Procédé pour fabriquer une dalle en matériaux agglomérés artificiels (8), le procédé comprenant les étapes suivantes :
a) distribuer une première couche (6) d'un premier mélange (6.2) sur une première surface (7), la première couche (6) ayant une première épaisseur,
b) former au moins une découpe (6.1) dans la première couche (6) au moyen d'un premier outil (1), la au moins une découpe (6.1) s'étendant au moins partiellement à travers la première épaisseur de la première couche (6),
c) distribuer un second mélange dans la au moins une découpe (6.1) de la première couche (6), et
d) compacter et durcir la combinaison des premier et second mélanges,
dans lequel :
- le premier outil (1) est monté sur un premier dispositif robotique (5),
- le premier outil (1) comprend un premier élément conique (2),
- le premier élément conique (2) présente une première extrémité (2.1), une seconde extrémité (2.2), un axe et une hauteur (2.3), la première extrémité (2.1) étant plus étroite que la seconde extrémité (2.2), et
**caractérisé en ce que** :
- la au moins une découpe (6.1) est formée dans la première couche (6) en insérant le premier élément conique (2), avec la première extrémité (2.1) en premier, dans la première épaisseur de la première couche (6), et en faisant tourner le premier élément conique (2) autour d'un premier axe (X) qui est sensiblement parallèle à l'axe ou à la hauteur (2.3) du premier élément conique (2), lorsque le premier élément conique (2) est déplacé en translation par le premier dispositif robotique (5) en suivant au moins un trajet prédéterminé à travers de la première couche (6).

2. Procédé de fabrication selon la revendication 1, dans lequel le second mélange occupe moins de 60 % v/v, ou de 10 à 60 % v/v, ou de 20 à 50 % v/v du volume de la cavité définie par une partie de la au moins une découpe (6.1).

3. Procédé de fabrication selon l'une quelconque des revendications précédentes, comprenant en outre la désagrégation du second mélange avant qu'il ne soit distribué dans la au moins une découpe (6.1).

4. Procédé de fabrication selon l'une quelconque des revendications précédentes, comprenant en outre de mécaniser au moins une des parois d'une zone de découpe de la au moins une découpe (6.1) au moyen d'un second outil après la distribution du second mélange dans la zone de découpe de la au moins une découpe (6.1).

5. Procédé de fabrication selon l'une quelconque des revendications précédentes, dans lequel une ou plusieurs découpes supplémentaires sont formées dans la première couche (6) au moyen d'un outil différent du premier outil, et facultativement dans lequel la au moins une découpe (6.1) est suivie dans son trajet par, et/ou est reliée à, une partie de la ou des découpes supplémentaires.

6. Procédé selon l'une quelconque des revendications précédentes, dans lequel :
- le premier mélange comprend un premier matériau particulaire et un premier liant, et le premier mélange comprend de préférence 80 à 95 % en poids du premier matériau particulaire et 5 à 20 % en poids du premier liant, et/ou
- le second mélange comprend un second matériau particulaire et un second liant, et le second mélange comprend de préférence 80 à 95 % en poids du second matériau particulaire et 5 à 20 % en poids du second liant.

7. Système de production pour la fabrication de dalles en matériaux agglomérés artificiels (9), par exemple par un procédé selon l'une quelconque des revendications 1 à 6, comprenant :
- un premier distributeur pour la distribution d'une première couche (6) d'un premier mélange sur une première surface,
- un premier dispositif robotique (5),
- un premier outil (1) monté sur le premier dispositif robotique (5), le premier outil (1) comprenant un premier élément conique (2) présentant une première extrémité (2.1), une seconde extrémité (2.2), un axe et une hauteur (2.3), la première extrémité (2.1) étant plus étroite que la seconde extrémité (2.2),
**caractérisé en ce que** :
- le premier outil (1) est agencé de manière à être inséré dans la première couche (6) avec la première extrémité (2.1) en premier, dans lequel le premier dispositif robotique (5) est configuré pour déplacer en translation le premier élément conique (2) en suivant au moins un trajet prédéterminé à travers la première couche (6), et **en ce que** le système comprend en outre :
- des premiers moyens de rotation (5.1) pour faire tourner le premier élément conique (2) autour d'un premier axe (X) sensiblement parallèle à l'axe ou à la hauteur (2.3) du premier élément conique (2) lorsque le premier élément conique (2) est déplacé en translation par le premier dispositif robotique (5) en suivant le au moins un trajet prédéterminé afin de créer au moins une découpe dans la première couche (6).

8. Système de production selon la revendication 7, comprenant en outre un second distributeur pour la distribution d'un second mélange, dans lequel le second distributeur est monté sur un deuxième dispositif robotique différent du premier dispositif robotique.

9. Système de production selon la revendication 8, dans lequel le second distributeur comprend un entonnoir ayant une ouverture d'entrée et une ouverture de sortie, la section transversale de l'ouverture d'entrée étant plus grande que la section transversale de l'ouverture de sortie, et dans lequel l'ouverture de sortie présente une section circulaire.

10. Système de production selon l'une quelconque des revendications 7 à 9, comprenant en outre un second outil configuré pour mécaniser au moins l'une des parois d'une zone de découpe de la au moins une découpe (6.1).

11. Système de production selon la revendication 10, dans lequel le second outil comprend un second élément conique et/ou le second outil est monté sur un troisième dispositif robotique.

12. Procédé selon l'une quelconque des revendications 1 à 6 ou système de production selon l'une quelconque des revendications 7 à 11, dans lequel :
- le premier élément conique (2) est configuré pour tourner à une vitesse de rotation de 300 à 4000 t/min, et/ou
- le premier dispositif robotique (5) est configuré pour déplacer en translation le premier élément conique (2) au moins à travers des parties de la première couche (6) à une vitesse de 200 à 900 mm/s.

13. Procédé selon l'une quelconque des revendications 1 à 6 ou 12, dans lequel le rapport entre la vitesse de rotation du premier élément conique (2) et la vitesse de sa translation à travers au moins une partie de la première couche (6) est de 2,5 à 7,5 tours par cm de translation.

14. Procédé de fabrication selon l'une quelconque des revendications 1 à 6, 12 ou 13, ou système de production selon l'une quelconque des revendications 7 à 12, dans lequel :
- la première extrémité (2.1) du premier élément conique (2) a un diamètre extérieur de 0,5 à 10 mm, facultativement de 2 à 6 mm, et/ou
- la seconde extrémité (2.2) du premier élément conique (2) a un diamètre extérieur de 20 à 120 mm ou de 20 à 90 mm, et/ou
- le rapport du diamètre extérieur de la seconde extrémité (2.2) sur le diamètre extérieur de la première extrémité (2.1) varie de 2 à 25 fois, facultativement de 5 à 20 fois.

15. Système de production selon l'une quelconque des revendications 7 à 12 ou 14, dans lequel les premiers moyens de rotation (5.1), tels qu'un servomoteur ou un moteur pneumatique, sont montés dans le premier dispositif robotique (5) et couplés au premier élément conique (2), de telle manière que les premiers moyens de rotation (5.1) sont déplacés en translation en association avec le premier élément conique (2).
